# EUROPÄISCHE PATENTANMELDUNG

(11) **EP 0 794 156 A1**
(43) Veröffentlichungstag der Anmeldung: **10.09.1997**
(21) Anmeldenummer: 96890034.0
(22) Anmeldetag: 05.03.1996
(51) Int. Cl.: C02F 1/00

(54) **Verfahren zum Reinigen betrieblicher Abwässer von darin gelösten organischen Stoffen, insbesondere Stärke oder Zellstoff**

(71) Anmelder: Garuda Consulting + Holding GmbH, 4810 Gmunden (AT)
(72) Erfinder: Joas, Emil, 4850 Timelkam (AT)
(74) Vertreter: Hübscher, Heiner, Dipl.-Ing.

(57) **Zusammenfassung**

Es wird ein Verfahren zum Reinigen betrieblicher Abwässer von darin gelösten organischen Stoffen, insbesondere Stärke oder Zellstoff, beschrieben, wobei dem Abwasser zunächst in einer Adsorptionsphase ein auf die abzuscheidenden organischen Stoffe abgestimmtes Adsorptionsmittel zugemischt und dann das mit den organischen Stoffen belastete Adsorptionsmittel in einer Sedimentationsphase abgeschieden wird. Um vorteilhafte Abscheidebedingungen sicherzustellen, wird vorgeschlagen, daß die in der Adsorptionsphase zuzumischende Adsorptionsmittelmenge in Abhängigkeit vom Verunreinigungsgrad aufgrund einer vorbestimmten Zuordnung zwischen dem Verunreinigungsgrad und den hiefür eingesetzten spezifischen Adsorptionsmittelmengen gesteuert wird, wobei die Trübung des Abwassers und die Sedimentationsrate nach einer vorgegebenen Sedimentationszeit gemessen und der Quotient dieser beiden Größen als Kennwert für den Verunreinigungsgrad bestimmt wird.

## Beschreibung

Die Erfindung bezieht sich auf ein Verfahren zum Reinigen betrieblicher Abwässer von darin gelösten organischen Stoffen, insbesondere Stärke oder Zellstoff, wobei dem Abwasser zunächst in einer Adsorptionsphase ein auf die abzuscheidenden organischen Stoffe abgestimmtes Adsorptionsmittel zugemischt und dann das mit den organischen Stoffen belastete Adsorptionsmittel in einer Sedimentationsphase abgeschieden wird.

Aus einem Produktionsprozeß anfallende, betriebliche Abwässer weisen im allgemeinen eine bekannte Zusammensetzung auf, wobei es gilt, von den gelösten Stoffen zumindest bestimmte Schadstoffe aus dem jeweiligen Abwasser abzuscheiden. Dies trifft auch für die Abwässer aus stärkeverarbeitenden Betrieben und Betrieben zur Papierherstellung zu. Es wird in diesem Fall eine entsprechende Abscheidung der Stärke bzw. des Zellstoffes verlangt. Der Abbau von Stärke bzw. Zellstoff aus betrieblichen Abwässern erfolgt in der Praxis mit Hilfe biologischer Klärverfahren, die aufwendig und unwirtschafflich sind. Eine Rückgewinnung der abgebauten organischen Stoffe ist unmöglich. Außerdem bedarf es erheblicher Mengen an Zuschlagstoffen um den Klärschlamm verpressen und deponieren zu können.

Darüberhinaus ist es zur Abscheidung von im Abwasser gelösten Schadstoffen bekannt, dem Abwasser ein auf die abzuscheidenden Schadstoffe abgestimmtes Adsorptionsmittel zuzumischen, um dann das schadstoffbelastete Adsorptionsmittel in einer Sedimentationsphase auszuscheiden. Der im allgemeinen auf die größte zu erwartende Schadstoffkonzentration abgestellte Adsorptionsmitteleinsatz macht allerdings dieses bekannte Abscheideverfahren für den praktischen Einsatz unwirtschaftlich. Außerdem kann ein nicht auf die jeweilige Schadstoffkonzentration bezogener Adsorptionsmitteleinsatz zu einer mangelhaften Sedimentation der Schadstoffe führen.

Der Erfindung liegt somit die Aufgabe zugrunde, ein Verfahren zum Reinigen betrieblicher Abwässer der eingangs geschilderten Art anzugeben, mit dessen Hilfe organische Stoffe aus dem jeweiligen Abwasser in wirtschaftlicher Weise und mit einem hohen Abscheidungsgrad abgeschieden werden können.

Die Erfindung löst die gestellte Aufgabe dadurch, daß die in der Adsorptionsphase zuzumischende Adsorptionsmittelmenge in Abhängigkeit vom Verunreinigungsgrad aufgrund einer vorbestimmten Zuordnung zwischen dem Verunreinigungsgrad und den hiefür eingesetzten spezifischen Adsorptionsmittelmengen gesteuert wird, wobei die Trübung des Abwassers und die Sedimentationsrate nach einer vorgegebenen Sedimentationszeit gemessen und der Quotient dieser beiden Größen als Kennwert für den Verunreinigungsgrad bestimmt wird.

Da sich die Zusammensetzung der aus einem bestimmten betrieblichen Produktionsprozeß stammenden Abwässer nicht ändert, wohl aber die von sich ändernden Parametern abhängigen Schadstoffkonzentrationen, und da die für einen vorteilhaften Adsorptionsverlauf notwendige Menge an Adsorptionsmittel von der Konzentration des zu adsorbierenden Stoffes abhängt, muß zur Bestimmung der einzusetzenden Adsorptionsmittelmenge von einer vorgegebenen maximalen Schadstoffkonzentration ausgegangen und der Mengenbedarf für ein ausgewähltes Adsorptionsmittel bei unterschiedlichen Konzentrationen in Versuchsreihen bestimmt werden, und zwar an Hand des in bestimmten Zeitabständen gemessenen Sedimentationsergebnisses bzw. des Verunreinigungsgrades des Abwassers. Zu diesem Zweck werden die Trübung des Abwassers und die Sedimentationsrate nach einer vorgegebenen Sedimentationszeit gemessen und der Quotient dieser beiden Größen als Kennwert für die Verunreinigung bzw. den Reinheitsgrad ermittelt. Die Trübung kann einfach mit Hilfe einer Durchlichtmessung erfaßt werden. Die Sedimentationsrate ergibt sich z. B. aus der Höhe des Bodensatzes. Die gefundene Zuordnung zwischen dem jeweiligen Verunreinigungsgrad und der hiefür eingesetzten spezifischen Adsorptionsmittelmenge kann dann zum Festlegen der jeweils erforderlichen spezifischen Adsorptionsmittelmenge für das Abwasser eingesetzt werden, wobei zunächst von einer maximalen Schadstoffkonzentration auszugehen sein wird, weil ja die tatsächliche Schadstoffkonzentration im allgemeinen unbekannt ist.

Als Adsorptionsmittel kommen grundsätzlich Tonminerale, Metall- und Halbmetalloxide, Silicate und Mischungen dieser Stoffe in Frage. Ein jeweils geeignetes Adsorptionsmittel kann durch Vorversuche mit dem zu reinigenden Abwasser ermittelt werden, falls noch keine Erfahrungswerte vorliegen.

Wird in der Sedimentationsphase festgestellt, daß der beispielsweise zufolge der Vorversuche zu erwartende Reinheitsgrad nicht erreicht wird, so kann die in der Adsorptionsphase zuzumischende Adsorptionsmittelmenge entsprechend der vorbestimmten Abhängigkeit von Verunreinigungsgrad und Adsorptionsmittelmenge eingestellt werden. Dies ist bei einer kontinuierlichen Abwasserreinigung in einfacher Weise möglich. Um auch bei einer stufenweisen Abwasserreinigung eine vorteilhafte Steuerung der Adsorptionsmittelzugabe sicherstellen zu können, kann in weiterer Ausbildung der Erfindung in jeder Stufe vor dem Zumischen des Adsorptionsmittels der Verunreinigungsgrad an Hand einer aus der jeweiligen Stufe gezogenen Abwasserprobe ermittelt werden, der das Adsorptionsmittel in einer für diese Stufe vorbestimmten Menge anteilig zugemischt wurde, wobei dann das Adsorptionsmittel der jeweiligen Stufe in einer vom ermittelten Verunreinigungsgrad der Abwasserprobe abhängigen Menge zudosiert wird.

Mit der Abscheidung der Schadstoffe durch Adsorption steigt der pH-Wert des Abwassers. Dies hat sich für das Abscheiden organischer Stoffe als ungünstig erwiesen. Es empfiehlt sich daher eine Konstanthaltung des pH-Wertes. An Stelle einer pH-Wert-Kompensation könnte aber auch das Adsorptionsmittel an den sich ändernden pH-Wert angepaßt werden.

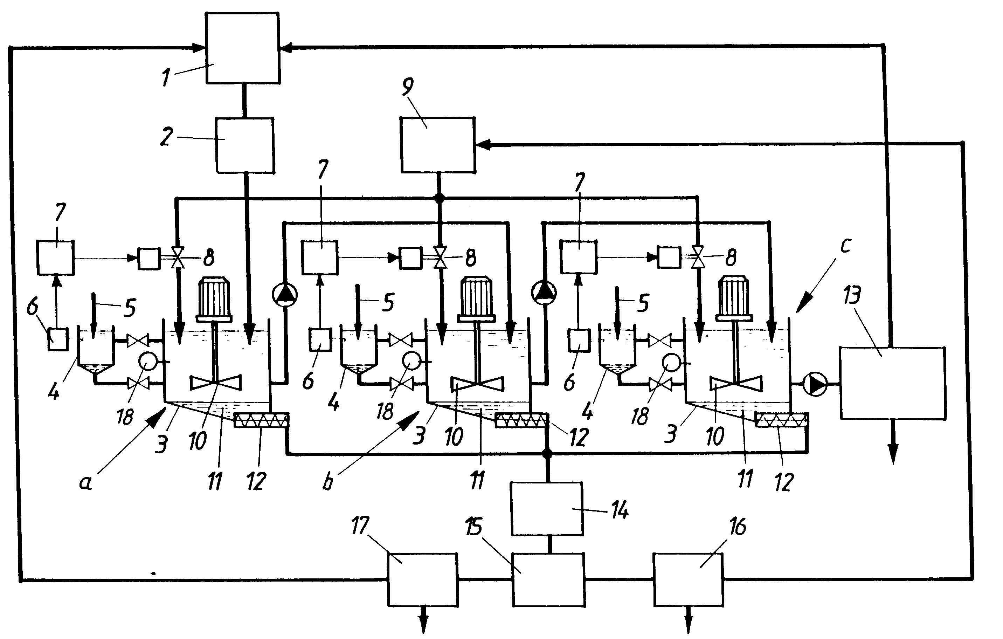

An Hand der Zeichnung wird das erfindungsgemäße Abwasserreinigungsverfahren näher erläutert, und zwar wird eine Anlage zur Durchführung des erfindungsgemäßen Verfahrens zur Reinigung eines mit Stärke oder Zellstoff belasteten Abwassers in einem schematischen Blockschaltbild gezeigt.

Gemäß dem dargestellten Ausführungsbeispiel soll ein aus einem betrieblichen Prozeß 1 anfallendes, in einem Auffangbehälter 2 gesammeltes Abwasser aus der Papierindustrie mit einer hohen Zellstoffbelastung gereinigt werden. Zu diesem Zweck wurde in Vorversuchsreihen mit diesem in seiner Zusammensetzung bekannten Abwasser ein geeignetes Adsorptionsmittel bestimmt, das aus 20 Gew.% Ca-Bentonit, 20 Gew.% Na-Bentonit, 50 Gew.% Al-Oxid und 10 Gew.% Zeolith zusammengesetzt war. Diese Vorversuche, die eine Abscheidung beispielsweise in fünf Stufen vorsahen, ergaben in jeder Stufe eine optimale Adsorptionsmittelmenge für gute Adsorptions- und Sedimentationsergebnisse, wobei der nach jeder Reinigungsstufe verbliebene Verunreinigungsgrad an Hand des Quotienten der Trübung des Abwassers und der Sedimentationsrate nach vorgegebenen Sedimentationszeiten bestimmt und der hiefür eingesetzten spezifischen Adsorptionsmittelmenge zugeordnet wurde, um mittels dieser vorbestimmten Abhängigkeit die Zugabe des Adsorptionsmittels steuern zu können. Zur Konstanthaltung des pH-Wertes in jeder Stufe der Vorversuche mußte eine Säure, beispielsweise Schwefelsäure, zudosiert werden.

Nach diesen Vorarbeiten kann nun Abwasser in einer vorgegebenen Menge aus dem Auffangbehälter 2 in einen Behandlungsbehälter 3 einer ersten Reinigungsstufe a gepumpt und an Hand einer Abwasserprobe aus diesem Behandlungsbehälter 3 die Reinigungswirkung mit der aus den Vorversuchen bestimmten, in der ersten Stufe auf eine maximale Schadstoffkonzentration abgestimmten spezifischen Adsorptionsmittelmenge überprüft werden. Zu diesem Zweck wird ein an den Behandlungsbehälter 3 angeschlossenes Probengefäß 4 mit Abwasser gefüllt, diesem Abwasser die vorbestimmte Adsorptionsmittelmenge zugeführt, wie dies durch den Pfeil 5 veranschaulicht wurde, und das Adsorptionsmittel im Abwasser unter innigem Rühren fein verteilt, um eine gleichmäßige Adsorption zu gewährleisten. Nach einer vorgegebenen, in den Vorversuchen festgelegten Sedimentationszeit wird mittels eines Meßwertgebers 6 der durch eine Trübungs- und eine Sedimentationsratenmessung ermittelte Verunreinigungsgrad einer Steuereinrichtung 7 zugeführt, die eine Dosiereinrichtung 8 für das Adsorptionsmittel ansteuert, das einem Vorratsspeicher 9 entnommen wird. Weicht der im Probengefäß 4 erreichte Reinheitsgrad von dem erwarteten Reinheitsgrad ab, so wird die dem Abwasser im Behandlungsbehälter 3 zugeführte Adsorptionsmittelmenge entsprechend der vorgegebenen Zuordnung zwischen dem Verunreinigungsgrad und der Adsorptionsmittelmenge dosiert. Durch das im Behandlungsbehälter vorgesehene Rührwerk 10 wird für eine für die Adsorptionsphase erforderliche gleichmäßige Verteilung gesorgt, was dadurch unterstützt werden kann, daß das Adsorptionsmittel in einer Aufschlämmung dem Abwasser zugemischt wird.

Mit dem Abstellen des Rührwerkes 10 und der Beruhigung des Abwassers beginnt die Sedimentationsphase, in der die mit den adsorbierten Verunreinigungen beladenen Teilchen des Adsorptionsmittels sich im Behandlungsbehälter 3 als Bodensatz 11 absetzen, der am Ende der zeitlich durch die Vorversuche festgelegten Sedimentationsphase beispielsweise über einen Schneckenaustrag 12 abgezogen werden kann, während das in der ersten Stufe a grob gereinigte Abwasser der zweiten Reinigungsstufe b zugepumpt wird. Zum Unterschied zu der dargestellten Anlage könnte die zweite und jede folgende Reinigungsstufe in einem einzigen Behälter 3 ohne Umpumpen des Abwassers durchgeführt werden, doch steht in einem solchen Fall der Behandlungsbehälter 3 erst nach allen Reinigungsstufen für eine neue Befüllung mit Abwasser aus dem Auffangbehälter 2 zur Verfügung.

In der zweiten und den nachfolgenden Reinigungsstufen b und c wiederholt sich der geschilderte Adsorptions- und Sedimentationsvorgang, wobei aufgrund der der eigentlichen Verfahrensstufe vorausgehenden Messungen in den Probengefäßen 4 das zu erwartende Reinigungsergebnis überprüfbar ist und gegebenenfalls die Verfahrensparameter an sich ändernde Verhältnisse angepaßt werden können. Ist der Verunreinigungsgrad des Abwassers auf das gewünschte Maß abgesunken, so kann das aus der jeweils letzten Reinigungsstufe abgezogene Abwasser in ein Becken 13 gepumpt werden, aus dem es beispielsweise einem Vorfluter zugeleitet werden kann. Vorteilhafter ist es allerdings, das von den Schadstoffen gereinigte Abwasser dem Prozeß 1 gegebenenfalls nach einer Zwischenbehandlung wieder als Frischwasser zuzuführen. Das mit den adsorbierten organischen Stoffen beladene Adsorptionsmittel gelangt über den jeweiligen Schneckenaustrag 12 in einen Sammelbehälter 14, aus dem es einer Desorptionsanlage 15 zugeführt wird, in der die Desorption durch eine pH-Wert-Verschiebung vorgenommen wird. Diese pH-Wert-Verschiebung kann sowohl in einem Säurebad als auch in einem Laugebad erfolgen. Das nach der Desorption weitgehend zellstofffreie Adsorptionsmittel muß in einer Aktivierungsstufe 16 in einem Neutralisationsbad regeneriert werden, um wieder für eine Schadstoffadsorption eingesetzt werden zu können. Nicht mehr regenerierfähiges Adsorptionsmittel wird dabei auszgeschieden. Die bei der Desorption wieder gelösten Zellstoffe können über eine Aufbereitungsanlage 17 entweder dem Prozeß 1 zugeführt oder aus dem Kreislauf ausgeschieden werden.

Zur Kompensation des in den einzelnen Stufen ansteigenden pH-Wertes wird in jeder der Stufen a, b, oder c der pH-Wert gemessen und durch ein Zudosieren von Säure konstant gehalten. Zu diesem Zweck ist jedem Behandlungsbehälter 3 ein Meßwertgeber 18 für den pH-Wert zugeordnet, so daß beim Ansteigen des pH-Wertes Säure dem Abwasser zudosiert werden kann, bis der ursprüngliche pH-Wert wieder erreicht ist.

Die Schadstoffbelastung des zu reinigenden Abwassers wurde mit 22.000 mg/l CSB (chemischer Sauerstoffbedarf) gemessen. Das Adsorptionsmittel wurde jeweils in einer Menge von 0,1 Vol.% der Abwassermenge in den einzelnen Stufen zudosiert. Nach einem dreistufigen Reinigungsverfahren mit einer Sedimentationszeit von jeweils 20 Minuten konnte bei einem konstant gehaltenen pH-Wert von 6,2 die Schadstoffbelastung auf 3.900 mg/l CSB verringert werden. Nach der ersten Stufe betrug dieser Wert 14.000 mg/l, nach der zweiten Stufe 7.200 mg/l. Durch das Anhängen weiterer Reinigungsstufen mit einer angeglichenen Adsorptionsmittelkonzentration kann dieser Belastungswert zusätzlich abgesenkt werden.

## Patentansprüche

1. Verfahren zum Reinigen betrieblicher Abwässer von darin gelösten organischen Stoffen, insbesondere Stärke oder Zellstoff, wobei dem Abwasser zunächst in einer Adsorptionsphase ein auf die abzuscheidenden organischen Stoffe abgestimmtes Adsorptionsmittel zugemischt und dann das mit den organischen Stoffen belastete Adsorptionsmittel in einer Sedimentationsphase abgeschieden wird, dadurch gekennzeichnet, daß die in der Adsorptionsphase zuzumischende Adsorptionsmittelmenge in Abhängigkeit vom Verunreinigungsgrad aufgrund einer vorbestimmten Zuordnung zwischen dem Verunreinigungsgrad und den hiefür eingesetzten spezifischen Adsorptionsmittelmengen gesteuert wird, wobei die Trübung des Abwassers und die Sedimentationsrate nach einer vorgegebenen Sedimentationszeit gemessen und der Quotient dieser beiden Größen als Kennwert für den Verunreinigungsgrad bestimmt wird.

2. Verfahren nach Anspruch 1, dadurch gekennzeichnet, daß bei einer stufenweisen Abwasserreinigung in jeder Stufe vor dem Zumischen des Adsorptionsmittels der Verunreinigungsgrad an Hand einer aus der jeweiligen Stufe gezogenen Abwasserprobe ermittelt wird, der das Adsorptionsmittel in einer für diese Stufe vorbestimmten Menge anteilig zugemischt wurde, und daß dann das Adsorptionsmittel der jeweiligen Stufe in einer vom ermittelten Verunreinigungsgrad der Abwasserprobe abhängigen Menge zudosiert wird.

3. Verfahren nach Anspruch 1 oder 2, dadurch gekennzeichnet, daß der pH-Wert von Stufe zu Stufe konstant gehalten bzw. das Adsorptionsmittel von Stufe zu Stufe an den sich ändernden pH-Wert angepaßt wird.
